# EUROPEAN PATENT APPLICATION

(11) **EP 4 104 656 A1**
(43) Date of publication of application: **21.12.2022**
(21) Application number: 22178998.5
(22) Date of filing: 14.06.2022
(51) Int. Cl.: A01B 63/32, A01D 67/00, A01D 78/00

(54) **A TEDDER APPARATUS**

(30) Priority: 14.06.2021 IE S20210119
(71) Applicant: McHale Engineering Unlimited Company, Ballinrobe, County Mayo (IE)
(72) Inventor: McHale, Padraic, Christopher, Clonbur, County Galway. (IE); McHale, Martin, William, Kilmaine, County Mayo. (IE); McHale, Paul, Gerard, Woodquay, County Galway. (IE); Biggins, John, Patrick, Claremorris, County Mayo. (IE); Collins, Donal, Patrick, Dunmore, County Galway. (IE); Sheridan, Gerard, Patrick, Kilmaine, County Mayo. (IE); Cunniffe, Eamonn, Edward, Michael, Castlerea, County Roscommon. (IE); Warren, John, Alexander, Hollymount, County Mayo., (IE)
(74) Representative: Gorman, Francis Fergus

(57) **Abstract**

A tedder apparatus (1) comprises a chassis (2) supported on main ground engaging wheels (5). A rotor carrier (14) is pivotally coupled to the chassis (2) about a main transverse pivot axis (17) by two carrier members (18) extending forwardly from the rotor carrier (14). The rotor carrier (14) carries two rotor carrying booms (15) extending from its respective opposite ends. Tedding rotors (23) are located at spaced apart intervals along the rotor carrier (14) and on the rotor carrying booms (15). Secondary ground engaging wheels (21) carried on wheels carriers (22) extend downwardly from the rotor carrier (14) and the rotor carrying booms (15) through the tedding rotors (23). A take-up tension spring (71) acting between the chassis (2) and the rotor carrier (14) take up some of the weight of the rotor carrier (14) and the rotor carrying booms (15) which bears on the ground through the two secondary ground engaging wheels (21) carried on the rotor carrier (14). The take-up spring (71) is coupled to a coupler (73) which is pivotally coupled to the chassis (2) about the main transverse pivot axis (17). A first engagement member (78) having an engagement recess (77) therein defining a contact point (79) engages an engagement pin (80) located on one of the carrier members (18) when the rotor carrier (14) is in the working state for taking up some of the weight of the rotor carrier (14) and the rotor carrying booms (15) bearing on the ground through the two secondary ground engaging wheels of the rotor carrier (14).

## Description

The present invention relates to a tedder apparatus, and the invention also relates to a method for taking up at least a portion of the weight of a rotor carrier bearing on the ground through at least one secondary ground engaging wheel of the rotor carrier.

Tedder apparatus for tedding crop material lying on the ground, for example, lying on stubble in a field are well known. Such tedding apparatus in general comprise a chassis supported on a pair of transversely spaced apart main ground engaging wheels, and a rotor carrier located to the rear of the chassis and extending transversely of the normal forward direction of travel of the tedder apparatus. Two rotor carrying booms extend outwardly from the respective opposite ends of the rotor carrier, and extend transversely relative to the normal forward direction of travel of the tedder apparatus. Tedding rotors are rotatably mounted on the rotor carrier and the rotor carrying booms at spaced apart intervals along the rotor carrier and the rotor carrying booms. Secondary ground engaging wheels in general extend downwardly from the rotor carrier and the rotor carrying arms through the tedding rotors for maintaining the level of the tedding rotors above the ground substantially constant as the tedder apparatus is being towed by a towing vehicle for tedding the crop material. The secondary ground engaging wheels follow the contour of the ground for in turn maintaining the level of the tedding rotors above the ground substantially constant. In general, the rotor carrier is pivotally coupled to the chassis about a main transversely extending pivot axis, so that as the secondary ground engaging wheels follow the contour of the ground, the rotor carrier pivots upwardly and downwardly about the main transverse pivot axis for in turn maintaining the tedding rotors at a substantially constant level above the ground.

A particular problem with such tedding rotors is that due to the fact that the rotor carrying booms are carried on the respective opposite ends of the rotor carrier, in general, the secondary ground engaging wheels which are carried on the rotor carrier tend to carry a significantly greater proportion of the weight of the rotor carrier and the rotor carrying booms, than that borne by the secondary ground engaging wheel of the rotor carrying booms. Thus, the weight of the rotor carrier and the rotor carrying booms bearing on the ground through the secondary ground engaging wheels of the rotor carrier is significantly greater than the weight of the rotor carrying booms bearing on the ground through the secondary ground engaging wheels of the corresponding rotor carrying boom. In some cases, the weight acting on the ground through the secondary ground engaging wheels of the rotor carrier, may be over twice the average weight bearing on the ground through the secondary ground engaging wheels of the rotor carrying booms. This has serious consequences, in that the secondary ground engaging wheels of the rotor carrier, and in particular, pneumatic tyres of the secondary ground engaging wheels of the rotor carrier must be of significantly greater load carrying capacity than the pneumatic tyres of the secondary ground engaging wheels of the rotor carrying booms. Additionally, the bearings and other associated components of the secondary ground engaging wheels and the associated supports of the secondary ground engaging wheels of the rotor carrier must be of greater load carrying capacity than the bearings and the associated components and supports of the secondary ground engaging wheels of the rotor carrying booms. This adds significantly to the cost of manufacturing such tedding apparatus, and also to the cost of providing spare parts for such tedding apparatus, as a result of the need to carry two different types of replacement pneumatic tyres and two different types of bearings and other associated components of the secondary ground engaging wheels in order to provide adequate spare parts for the ground engaging wheels of the rotor carrier and the rotor carrying booms.

There is therefore a need for a tedder apparatus which addresses this problem.

The present invention is directed towards providing such a tedder apparatus, and the invention is also directed towards providing a method for taking up at least a portion of the weight of a rotor carrier bearing on the ground through at least one secondary ground engaging wheel of the rotor carrier.

According to the invention there is provided a tedder apparatus comprising a chassis extending between a forward end and a rearward end, and supported on a pair of transversely spaced apart rotatably mounted main ground engaging wheels, a rotor carrier pivotally coupled to the chassis adjacent the rearward end thereof about a main transverse pivot axis extending transversely of the normal forward direction of travel of the tedder apparatus, the rotor carrier being pivotal about the main transverse pivot axis between a working state and a transport state, at least one tedding rotor carried on the rotor carrier, and at least one rotatably mounted secondary ground engaging wheel carried on the rotor carrier for maintaining the level of the tedding rotor above the ground substantially constant in the working state of the rotor carrier, wherein a take-up means is adapted to act between the chassis and the rotor carrier to take up a portion of the weight of the rotor carrier bearing on the ground through the at least one secondary ground engaging wheel when the rotor carrier is in the working state.

In one embodiment of the invention the rotor carrier is operable in a plurality of selectable working positions in the working state thereof with the at least one tedding rotor at respective selectable levels above the ground, and the take-up means is adapted to take up the portion of the weight of the rotor carrier over the range of working positions of the rotor carrier in the working state thereof.

In another embodiment of the invention the take-up means is releasably engageable with the rotor carrier, and is adapted to operably engage the rotor carrier in the working state thereof.

In another embodiment of the invention the take-up means is adapted to operably engage the rotor carrier as the rotor carrier is being pivoted into the working state from the transport state.

In another embodiment of the invention the take-up means is adapted to disengage the rotor carrier as the rotor carrier is being pivoted out of the working state to the transport state.

Preferably, the take-up means is operably coupled to the rotor carrier through a pivotally mounted coupler. Advantageously, the coupler is pivotally coupled about a coupler pivot axis extending parallel to the main transverse pivot axis.

In one embodiment of the invention the coupler is pivotally coupled to the chassis.

In another embodiment of the invention the coupler pivot axis coincides with the main transverse pivot axis.

Preferably, the coupler comprises a first engagement member engageable with a second engagement member of the rotor carrier in the working state of the rotor carrier.

In one embodiment of the invention the first engagement member is engageable with the second engagement member at a contact point, and preferably, the first engagement member defines the contact point, and advantageously, the contact point is spaced apart from the coupler pivot axis to define a first moment arm about which the weight of the rotor carrier taken up by the take-up means acts about the coupler pivot axis.

Preferably, the first engagement member is disengageable from the second engagement member.

In one embodiment of the invention the second engagement member is rigidly connected directly or indirectly to the rotor carrier.

In another embodiment of the invention the take-up means is coupled to the coupler, and preferably, the take-up means is coupled to the coupler at a location spaced apart from the coupler pivot axis to define a second moment arm about which the take-up means acts about the coupler pivot axis.

In one embodiment of the invention the length of the second moment arm is greater than the length of the first moment arm, and preferably, the length of the second moment arm is greater than the length of the first moment arm by a factor in the range of 1.6 to 4. Advantageously, the length of the second moment arm is greater than the length of the first moment arm by a factor in the range of 2 to 3, and ideally, the length of the second moment arm is greater than the length of the first moment arm by a factor of approximately 2.5.

In another embodiment of the invention the contact point of the first engagement member with the second engagement member is spaced apart from the main transverse pivot axis to define a third moment arm through which the weight of the rotor carrier to be taken up by the take-up means acts about the main transverse pivot axis.

In another embodiment of the invention the point at which the at least one secondary ground engaging wheel engages the ground and through which the weight of the rotor carrier acts is spaced apart from the main transverse pivot axis and defines a fourth moment arm through which the weight of the rotor carrier acts about the main transverse pivot axis.

In another embodiment of the invention the length of the fourth moment arm is greater than the length of the third moment arm, and in another embodiment of the invention the length of the fourth moment arm is greater than the length of the third moment arm by a factor in the range of 4.7 to 13. Advantageously, the length of the fourth moment arm is greater than the length of the third moment arm by a factor in the range of 6.7 to 9.25, and preferably, the length of the fourth moment arm is greater than the length of the third moment arm by a factor of approximately 7.5.

In one embodiment of the invention the length of the third moment arm is the same as the length of the first moment arm.

In one embodiment of the invention the first moment arm is of length in the range of 106mm to 206mm, and preferably, the length of the first moment arm is approximately 156mm.

In another embodiment of the invention the length of the second moment arm lies in the range of 332mm to 432mm, and preferably, the length of the second moment arm is approximately 382mm.

In a further embodiment of the invention the third moment arm is of length in the range of 106mm to 206mm, and preferably, the third moment arm is of length of approximately 156mm.

In another embodiment of the invention the fourth moment arm is of length in the range of 981mm to 1,381mm, and preferably, the length of the fourth moment arm is approximately 1,181mm.

In one embodiment of the invention the take-up means comprises a resilient take-up element.

In another embodiment of the invention the take-up means comprises one of a mechanical spring, a pneumatic spring and a hydraulic spring.

Preferably, the take-up means comprises a tension spring.

Preferably, the take-up means is coupled to the chassis by an anchor bracket mounted on the chassis, and advantageously, the anchor bracket is located on the chassis spaced apart from the coupler pivot axis, and preferably, forwardly spaced apart from the coupler pivot axis.

In another embodiment of the invention the anchor bracket of the take-up means is spaced apart from the main transverse pivot axis, and preferably, spaced apart forwardly from the main transverse pivot axis.

In another embodiment of the invention the rotor carrier comprises an elongated rotor carrier extending transversely of the normal forward direction of travel of the tedder apparatus, and preferably, the rotor carrier extends parallel to the main transverse pivot axis.

In one embodiment of the invention two of the tedding rotors are carried on the rotor carrier spaced apart transversely along the rotor carrier.

In another embodiment of the invention two of the secondary ground engaging wheels are carried on the rotor carrier spaced apart along the rotor carrier.

In one embodiment of the invention the rotor carrier is carried on a pair of transversely spaced apart carrier members extending from the main transverse pivot axis and extending substantially perpendicularly from the main transverse pivot axis.

In another embodiment of the invention the rotor carrier comprises two elongated rotor carrying booms extending from the rotor carrier adjacent transversely opposite ends thereof, and preferably, each rotor carrying boom carries a plurality of the tedding rotors spaced apart longitudinally along the corresponding rotor carrying boom. Advantageously, each rotor carrying boom carries a plurality of the secondary ground engaging wheels spaced apart longitudinally along the corresponding rotor carrying boom.

In one embodiment of the invention the rotor carrying booms are operably coupled to the rotor carrier, and are operable from a working state to a transport state while the rotor carrier is being pivoted from the working state to the transport state.

Advantageously, in the working state thereof the rotor carrying booms extend from the respective transversely opposite ends of the rotor carrier outwardly therefrom, and extend transversely relative to the normal forward direction of travel of the tedder apparatus.

In one embodiment of the invention the rotor carrying booms in the transport state thereof extend forwardly from the rotor carrier, and preferably, substantially parallel to the chassis.

The invention also relates to a method for taking up at least a portion of the weight of a rotor carrier carrying at least one tedding rotor and at least one rotatably mounted secondary ground engaging wheel through which the weight of the rotor carrier bears on the ground, whereby the rotor carrier is pivotally coupled to a chassis of a tedder apparatus about a transversely extending main transverse pivot axis between a working state and a transport state, and the chassis is supported on a pair of main ground engaging wheels, the method comprising providing a take-up means acting between the chassis and the rotor carrier to take up the portion of the weight of the rotor carrier bearing on the ground through the at least one secondary ground engaging wheel in the working state of the rotor carrier.

In another embodiment of the invention the take-up means is releasably engageable with the rotor carrier, and operably engages the rotor carrier in the working state thereof.

In one embodiment of the invention the take-up means takes up the portion of the weight of the rotor carrier as the rotor carrier is pivoting into the working state from the transport state.

In another embodiment of the invention the take-up means disengages the rotor carrier as the rotor carrier is pivoting out of the working state to the transport state.

Preferably, the take-up means is operably coupled to the rotor carrier through a pivotally mounted coupler. Advantageously, the coupler is pivotally coupled about a coupler pivot axis extending parallel to the main transverse pivot axis.

In one embodiment of the invention the coupler is pivotally coupled to the chassis.

In another embodiment of the invention the coupler pivot axis coincides with the main transverse pivot axis.

In another embodiment of the invention the coupler comprises a first engagement member engageable with a second engagement member of the rotor carrier, and cooperable with the second engagement member of the rotor carrier in the working state of the rotor carrier.

In another embodiment of the invention the take-up means is coupled to the coupler, and preferably, the take-up means is coupled to the coupler at a location spaced apart from the coupler pivot axis.

In one embodiment of the invention the take-up means comprises a resilient take-up element.

In another embodiment of the invention the take-up means comprises one of a mechanical spring, a pneumatic spring and a hydraulic spring.

Preferably, the take-up means comprises a tension spring.

Preferably, the take-up means is coupled to the chassis by an anchor bracket mounted on the chassis.

In another embodiment of the invention the rotor carrier comprises an elongated rotor carrier extending transversely of the normal forward direction of travel of the tedder apparatus, and preferably, the rotor carrier extends parallel to the main transverse pivot axis.

In another embodiment of the invention two of the tedding rotors are carried on the rotor carrier transversely spaced apart along the rotor carrier.

In one embodiment of the invention two of the secondary ground engaging wheels are carried on the rotor carrier spaced apart transversely along the rotor carrier.

In another embodiment of the invention the rotor carrier comprises two elongated rotor carrying booms extending from the rotor carrier adjacent transversely opposite ends thereof, and preferably, each rotor carrying boom carries a plurality of the tedding rotors spaced apart longitudinally along the corresponding rotor carrying boom. Advantageously, each rotor carrying boom carries a plurality of the secondary ground engaging wheels spaced apart longitudinally along the corresponding rotor carrying boom.

In one embodiment of the invention the rotor carrying booms are operable from a working state to a transport state as the rotor carrier is being pivoted from the working state to the transport state.

Advantageously, in the working state thereof the rotor carrying booms extend from the respective transversely opposite ends of the rotor carrier outwardly therefrom, and extend transversely relative to the normal forward direction of travel of the tedder apparatus.

The advantages of the invention are many. A particularly important advantage of the invention is that it provides a tedder apparatus in which the pneumatic tyres, bearings and other associated components of secondary ground engaging wheels of the rotor carrier and the rotor carrying booms, which follow the contour of the ground for maintaining the tedding rotors carried on the rotor carrier and the rotor carrying booms may be standardised. This, is a significant advantage, in that it by standardising of the pneumatic tyres, bearings and other components associated with the secondary ground engaging wheels of the rotor carrier and the rotor carrying booms, the production costs of such tedder apparatus is significantly reduced. Furthermore, the costs of providing and maintaining stocks of spare parts required for subsequently servicing and maintaining such tedder apparatus is also significantly reduced.

These advantages of the invention are achieved by the provision of the take-up means for taking up a portion of the weight of the rotor carrier and rotor carrying booms bearing on the ground through the secondary ground engaging wheels of the rotor carrier.

Another advantage of the invention is that the weight bearing on the ground through the secondary ground engaging wheels is more evenly distributed over the secondary ground engaging wheels, and thereby, excessive weight bearing on the ground through any one of the secondary ground engaging wheels carried on the rotor carrier is significantly reduced, which in turn results in a reduction in soil compaction by the secondary ground engaging wheels carried on the rotor carrier. This in turn leads to increased crop yields as well as nutrient uptake and a reduction in fertilizer runoff.

A further advantage of the invention is that by virtue of the fact that the take-up means takes up a portion of the weight bearing on the ground through the secondary ground engaging wheels of the rotor carrier, the take-up means also takes up a portion of the impact of the secondary ground engaging wheels of the rotor carrier with the ground resulting from the weight of the rotor carrier and the rotor carrying booms which acts through the secondary ground engaging wheels of the rotor carrier as the rotor carrier is being urged from the transport state into the working state. Thereby the impact load acting through the secondary ground engaging wheels on the ground as the rotor carrier is being pivoted into the working state from the transport state is minimised.

The invention will be more clearly understood from the following description of a preferred embodiment thereof which is given by way of example only with reference to the accompanying drawings, in which:
Fig. 1 is a perspective view of a tedder apparatus according to the invention,
Fig. 2 is another perspective view of the tedder apparatus of Fig. 1,
Fig. 3 is a rear end elevational view of the tedder apparatus of Fig. 1 in the state of Fig. 1,

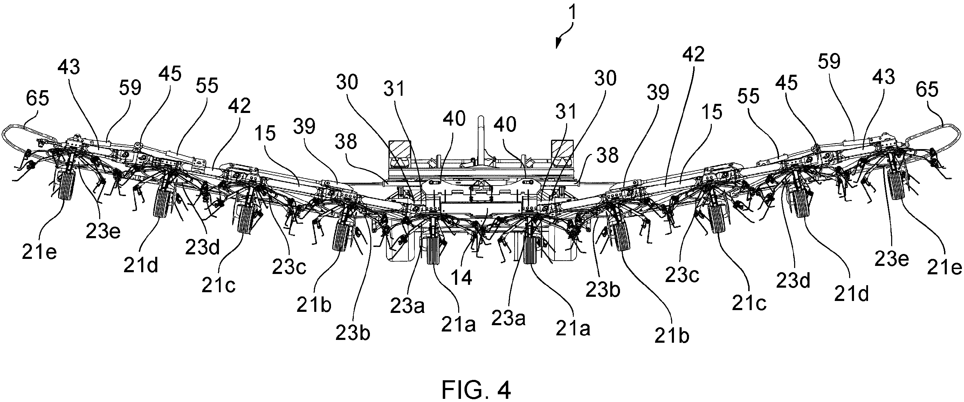

Fig. 4 is a rear end elevational view of the tedder apparatus of Fig. 1 illustrating portions of the tedder apparatus in a different state to that of Fig. 1,

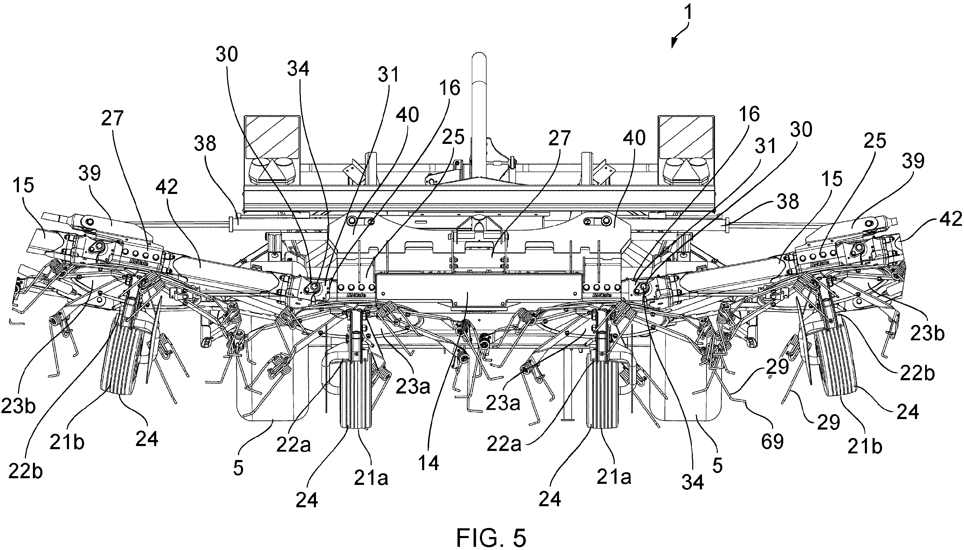

Fig. 5 is an enlarged rear end elevational view of a portion of the tedder apparatus of Fig. 1 in the state of Fig. 4,
Fig. 6 is a side elevational view of the tedder apparatus of Fig. 1 in a different state to that of Figs. 1 to 3,
Fig. 7 is a perspective view of a portion of the tedder apparatus of Fig. 1 in a state intermediate the state of Figs. 1 to 3 and the state of Fig. 6,
Fig. 8 is an enlarged perspective view of a portion of the tedder apparatus of Fig. 1,
Fig. 9 is a side elevational view of a portion of the tedder apparatus of Fig. 1,
Fig. 10 is a view similar to Fig. 9 of the tedder apparatus of Fig. 1 illustrating a portion of the tedder apparatus in a different state to that of Fig. 9,
Fig. 11 is a view similar to that of Fig. 9 of the portion of the tedder apparatus of Fig. 1,
Fig. 12 is a side elevational view of a portion of the tedder apparatus of Fig. 1,
Fig. 13 is a view similar to Fig. 12 of the portion of Fig. 12 of the tedder apparatus illustrating the portion in a different state to that of Fig. 12,
Fig. 14 is a diagrammatic side elevational view of a detail of the portion of Fig. 9 of the tedder apparatus of Fig. 1,
Fig. 15 is a diagrammatic side elevational view similar to that of Fig. 14 of the tedder apparatus of Fig. 1 but with a portion of the detail in a different working position to that of Fig. 14, and
Fig. 16 is a perspective view of another detail of the tedder apparatus of Fig. 1.

Referring to the drawings there is illustrated a tedder apparatus according to the invention indicated generally by the reference numeral 1 for tedding crop material lying on the ground, such as hay, straw and the like. The tedder apparatus 1 comprises a chassis 2 extending from a rearward end 3 to a forward end 4. The chassis 2 is carried on a pair of transversely spaced apart main ground engaging wheels 5, which are rotatably carried on a suspension system 7. The suspension system 7 comprises a pair of spaced apart suspension arms 8 pivotally coupled to the chassis 2 by respective suspension mounting brackets 6. The suspension mounting brackets 6 are secured to the chassis 2 and carry respective pivot shafts 9 defining a common transverse suspension pivot axis 10 about which the suspension system 7 is pivotal for raising and lowering the level of the chassis 2 above the ground, for a purpose to be described below. The suspension arms 8 extend from the pivot shafts 9 and terminate in and are rigidly secured to a transversely extending axle shaft 11a, on which the main ground engaging wheels 5 are rotatably carried about a common transversely extending rotational axis 12.

A reinforcing strut 11b spaced apart from the axle shaft 11a extends between the suspension arms 8 for rigidly securing the suspension arms 8 of the suspension system 7. A screw threaded adjusting spindle (not shown) housed within a pair of telescoping members 11c acts between a connecting member 11d extending from the reinforcing strut 11b and a pair of brackets 11e mounted on the chassis 2 for pivoting the suspension arms 8 and the suspension system 7 about the suspension pivot axis 10 for in turn raising and lowering the level of the chassis 2 above the ground. A rotatably mounted shaft 11f extends forwardly from the adjusting screw (not shown), which is housed within the telescoping members 11c, to a cranked handle 11g located adjacent the forward end 4 of the chassis 2 for rotating the adjusting spindle for pivoting the suspension system 7 about the suspension pivot axis 10.

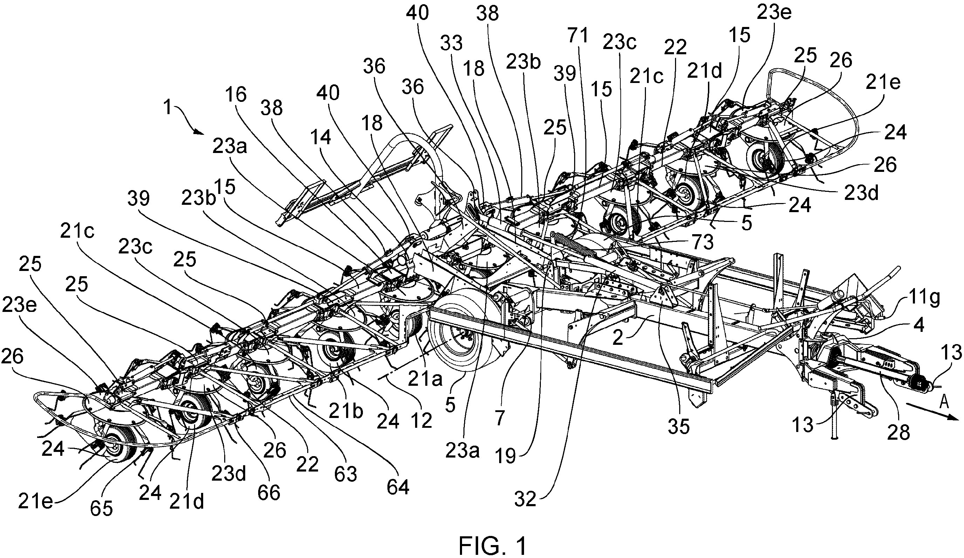

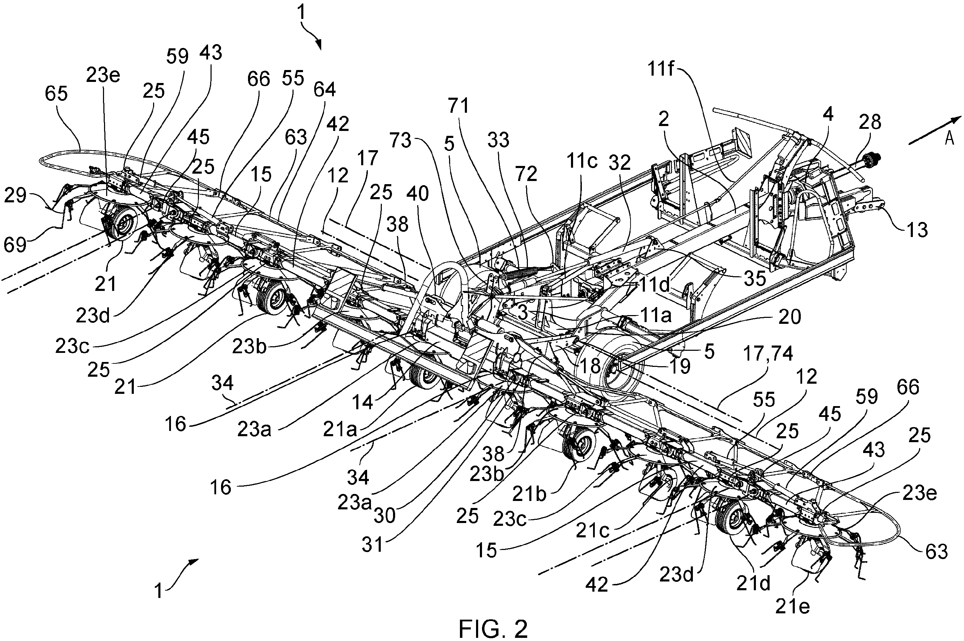

A pair of spaced apart connectors 13 extend forwardly from the forward end 4 of the chassis 2 for coupling the tedder apparatus 1 to a lower pair of coupling points of a three point linkage of a prime mover, for towing the tedder apparatus 1, for example, the lower two coupling points of a three point linkage of a tractor, or other such suitable towing vehicle. The transverse suspension pivot axis 10 and the transverse rotational axis 12 of the main ground engaging wheels 5 extend parallel to each other and extend transversely of the normal forward direction of travel of the tedder apparatus 1 in the direction of the arrow A, see Figs. 1 and 2.

A rotor carrier, which in this embodiment of the invention comprises an elongated transversely extending rotor carrier 14 and a pair of elongated rotor carrying booms 15 extend from opposite transverse ends 16 of the rotor carrier 14. The rotor carrier 14 extends transversely of the normal forward direction of travel of the tedder apparatus 1 and is pivotally coupled to the chassis 2 adjacent the rearward end 3 thereof about a main transverse pivot axis 17, which also extends transversely of the normal forward direction of travel of the tedder apparatus 1, and extends parallel to the rotor carrier 14 and parallel to the transverse suspension pivot axis 10 and the transverse rotational axis 12 of the ground engaging wheels 5. A pair of transversely spaced apart carrier members 18 extending forwardly and rigidly from the rotor carrier 14 pivotally couples the rotor carrier 14 to the chassis 2 about the main transverse pivot axis 17. A pair of pivot shafts 19 carried on brackets 20 extending rearwardly from the rearward end 3 of the chassis 2 pivotally carry the carrier members 18 of the rotor carrier 14. The pivot shafts 19 extend transversely of the normal forward direction of travel of the tedder apparatus 1 and are aligned with each other and define the main transverse pivot axis 17 about which the rotor carrier 14 is pivotal.

A plurality of secondary ground engaging wheels 21 are rotatably carried on respective wheel carriers 22 extending downwardly from the rotor carrier 14 and from the rotor carrying booms 15. In this embodiment of the invention two of the wheel carriers 22, namely, the wheel carriers 22a are located on the rotor carrier 14 and are spaced apart transversely thereon relative to the normal forward direction of travel of the tedder apparatus 1. The two wheel carriers 22a carry two corresponding secondary ground engaging wheels 21, namely, the secondary ground engaging wheels 21a. Four of the wheel carriers 22, namely, the wheel carriers 22b to 22e are located on each of the rotor carrying booms 15 spaced apart longitudinally along the respective rotor carrying booms 15. The wheel carriers 22b to 22e carry corresponding ones of the secondary ground engaging wheels 21, namely, the secondary ground engaging wheels 21b to 21e. Each secondary ground engaging wheel 21 comprises a pneumatic tyre 24.

A plurality of tedding rotors 23 are provided on the rotor carrier 14 and on the rotor carrying booms 15. Each tedding rotor 23 is rotatably mounted on a corresponding one of the wheel carriers 22, and accordingly, two of the tedding rotors 23, namely, the tedding rotors 23a are carried on the rotor carrier 14, and each one of the rotor carrying booms 15 carries four of the tedding rotors 23, namely, tedding rotors 23b to 23e. Each tedding rotor 23 comprises a rotor disc 26 and a plurality of crop engaging tines 29 extending radially outwardly from the rotor disc 26 at spaced apart intervals around the periphery of the rotor disc 26. The tedding rotors 23 are driven through corresponding secondary gearboxes 25 located on the corresponding ones of the rotor carrier 14 and the rotor carrying booms 15 adjacent the corresponding wheel carriers 22. Drive is transmitted sequentially through the secondary gearboxes 25 from a main gearbox 27 mounted on the rotor carrier 14 through corresponding transmission shafts (not shown) located within the rotor carrier 14 and the rotor carrying booms 15 for rotating the tedding rotors 23. Drive is transmitted from the secondary gearboxes 25 to the corresponding ones of the tedding rotors 23 through respective drive transmission shafts (not shown) in the wheel carriers 22 as will be well known to those skilled in the art. A main drive shaft (not shown) delivers drive to the main gearbox 27. The main drive shaft (not shown) extends through the chassis 2 and comprises a cardan shaft 28 extending forwardly from the forward end 4 of the chassis 2 for coupling to a power take-off shaft of the towing vehicle.

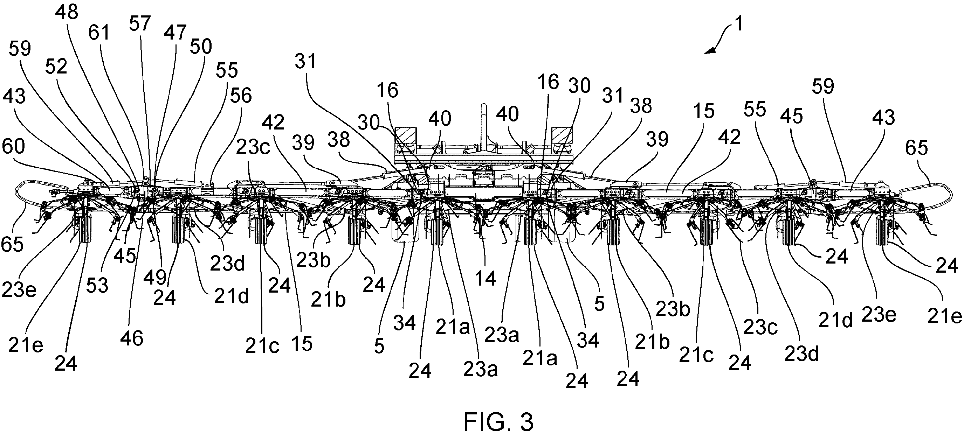

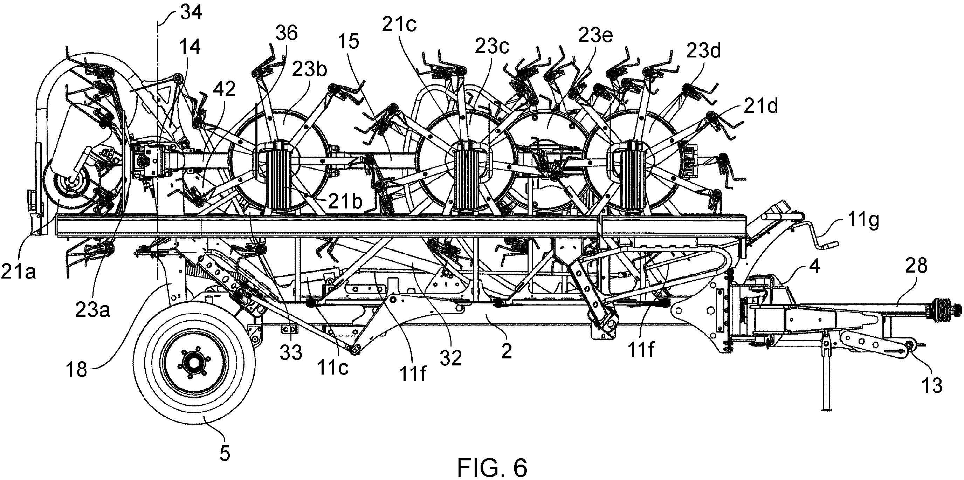

The rotor carrier 14 is pivotal about the main transverse pivot axis 17 between a working state illustrated in Figs. 1 to 3 and a transport state illustrated in Fig. 6. The rotor carrying booms 15 are pivotally coupled to the rotor carrier 14 adjacent the corresponding ends 16 thereof about respective secondary pivot axes 34, and are pivotal about the respective secondary pivot axes 34 from the working state illustrated in Figs. 1 to 3 when the rotor carrier 14 is also in the working state, through an angle of approximately 90°, so that when the rotor carrier 14 is in the transport state, the rotor carrying booms 15 are also in the transport state illustrated in Fig. 6 extending forwardly from the rotor carrier 14, as will be described in more detail below. A pair of pivot shafts 30 carried in corresponding brackets 31 extending from the rotor carrier 14 adjacent the respective opposite ends 16 thereof pivotally couple the respective rotor carrying booms 15 to the rotor carrier 14 about the secondary pivot axes 34.

The main drive shaft (not shown), which transmits drive from the power take-off shaft of the towing vehicle to the main gearbox 27 is configured to permit pivoting of the rotor carrier 14 between the working state and the transport state thereof. The transmission shafts (not shown), which are located within the rotor carrier 14 and the rotor carrying booms 15 for transmitting drive from the main gearbox 27 to the secondary gearboxes 25, are configured to permit pivoting of the rotor carrying booms 15 between the working state and the transport state. This will be well known to those skilled in the art.

A pair of main hydraulic rams, namely, a first main hydraulic ram 32 and a second main hydraulic ram 33 coupled in series between a mounting bracket 35 mounted on the chassis 2 and a pair of connecting struts 36 extending from the rotor carrier 14 pivots the rotor carrier 14 between the working state and the transport state about the main transverse pivot axis 17. The first and second main hydraulic rams 32 and 33 are operable in a floating state when the rotor carrier 14 is in the working state to permit pivoting of the rotor carrier 14 about the main transverse pivot axis 17 to accommodate uneven ground as the secondary ground engaging wheels 21 follow the contour of the ground as the tedder apparatus 1 is being towed by the towing vehicle along the ground for tedding the crop material.

A pair of secondary hydraulic rams 38 coupled between mounting brackets 39 on the respective rotor carrying booms 15 and mounting brackets 40 located on the rotor carrier 14 pivots the rotor carrying booms 15 about the secondary pivot axes 34 relative to the rotor carrier 14 from the working state to the transport state as the rotor carrier 14 is being pivoted from the working state to the transport state. Additionally, when the rotor carrying booms 15 are in the working state, the secondary hydraulic rams 38 are operable in a floating state to permit pivoting of the rotor carrying booms 15 about the secondary pivot axes 34 relative to the rotor carrier 14 to accommodate uneven ground as the secondary ground engaging wheels 21 of the rotor carrying booms 15 follow the contour of the ground.

Turning now in more detail to the rotor carrying booms 15, each rotor carrying boom 15 comprises an inner segment 42, which is pivotally coupled to the rotor carrier 14 by the corresponding one of the pivot shafts 30, and an outer segment 43 which is pivotally coupled to the inner segment 42 by a coupling element 45. The outer segment 43 is pivotal about the coupling element 45 from a working state, corresponding to the working state of the rotor carrying boom 15 illustrated in Figs. 1 to 3 with the outer segment 43 extending outwardly from the inner segment 42, to a transport state illustrated in Fig. 6 with the outer segment 43 lying substantially parallel and adjacent to the inner segment 42.

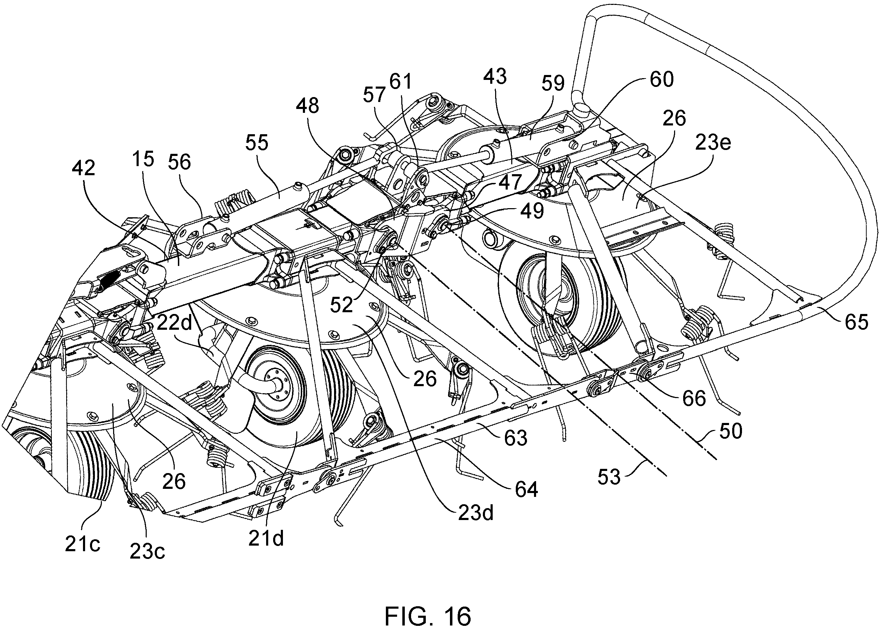

Referring now in particular to Fig. 16, the coupling element 45 comprises a central member 46, and a first pivot mounting bracket 47 extending from one side of the central member 46 and a second pivot mounting bracket 48 extending from the opposite side of the central member 46. The first pivot mounting bracket 47 carries a first pivot shaft 49 which pivotally couples the coupling element 45 to the inner segment 42, and defines a first pivot axis 50 about which the coupling element 45 is pivotal relative to the inner segment 42 through an angle of approximately 90°. The first pivot axis 50 extends parallel to the corresponding secondary pivot axis 34 about which the rotor carrying boom 15 is pivotal relative to the rotor carrier 14. The second pivot mounting bracket 48 carries a second pivot shaft 52 which pivotally couples the outer segment 43 to the coupling element 45 about a second pivot axis 53, which extends parallel to the first pivot axis 50, and in turn to the corresponding secondary pivot axis 34 about which the rotor carrying boom 15 is pivotally coupled to the rotor carrier 14. The outer segment 43 is pivotal about the second pivot axis 53 through an angle of approximately 90° relative to the coupling element 45.

A first hydraulic ram 55 coupled between a mounting bracket 56 mounted on the inner segment 42, and a first mounting bracket 57 mounted on the coupling element 45 pivots the coupling element 45 about the first pivot axis 50 through the angle of approximately 90°, for in turn urging the coupling element 45 and the outer segment 43 from the working state illustrated in Figs. 1 to 3, to an intermediate state (not shown) with the outer segment 43 extending substantially perpendicularly to the inner segment 42. A second hydraulic ram 59 coupled between a mounting bracket 60 mounted on the outer segment 43, and a second mounting bracket 61 mounted on the coupling element 45 pivots the outer segment 43 about the second pivot axis 53 through the angle of approximately 90° relative to the coupling element 45, so that when the coupling element 45 and the outer segment 43 are in the intermediate state extending perpendicularly to the inner segment 42, by operating the second hydraulic ram 59 to urge the outer segment 43 through 90° relative to the coupling element 45, the outer segment 43 is urged into the transport state, with the outer segment 43 lying substantially parallel and adjacent to the inner segment 42.

The inner segment 42 of each rotor carrying boom 15 carries the corresponding wheel carriers 22b to 22d, the corresponding secondary ground engaging wheels 21b to 21d, and the corresponding tedding rotors 23b to 23d of the rotor carrying boom 15. The outer segment 43 of each rotor carrying boom 15 carries the corresponding wheel carrier 22e, the corresponding secondary ground engaging wheel 21e and the corresponding tedding rotor 23e of the rotor carrying boom 15.

In the working state of each rotor carrying boom 15, the corresponding second hydraulic ram 59 maintains the outer segment 43 relatively rigid relative to the coupling element 45. However, the first hydraulic ram 55 is coupled to the first mounting bracket 57 of the coupling element 45 to permit limited relative pivotal movement of the outer segment 43 and the coupling element 45 about the first pivot axis 50, in order to accommodate uneven ground as the corresponding secondary ground engaging wheel 21e follows the contour of the ground.

A safety framework 63 connected to each rotor carrying boom 15 is provided in two segments, namely, an inner segment 64 secured to the inner segment 42 of the corresponding rotor carrying boom 15, and an outer segment 65 secured to the outer segment 43 of the corresponding rotor carrying boom 15. The outer segment 65 of the safety framework 63 is coupled to the inner segment 64 thereof by a coupling element 66, which couples the outer segment 65 of the safety framework 63 to the inner segment 64 thereof in a similar manner as the coupling element 45 couples the outer segment 43 to the inner segment 42 of the corresponding rotor carrying boom 15. Thus, as the outer segment 43 of the rotor carrying boom 15 is pivoted from the working state to the transport state, the outer segment 65 of the safety framework 63 is correspondingly pivoted about the coupling element 66 from a working state to a transport state.

The secondary ground engaging wheels 21 support the rotor carrier 14 and the rotor carrying booms 15 when the rotor carrier 14 and the rotor carrying booms 15 are in the working state. Additionally, the secondary ground engaging wheels 21 cooperate with the corresponding tedding rotors 23 for maintaining the level of the tedding rotors 23 above the ground substantially constant as the secondary ground engaging wheels 21 follow the contour of the ground. Accordingly, in the working state, the rotor carrier 14 and the rotor carrying booms 15 are essentially supported on the secondary ground engaging wheels 21, and the rotor carrier 14 pivots about the main transverse pivot axis 17, the rotor carrying booms 15 pivot about the secondary pivot axes 34 and the outer segments 43 of the rotor carrying booms 15 pivot about the first pivot axes 50, as the secondary ground engaging wheels 21 follow the contour of the ground.

The rotor carrier 14 and the rotor carrying booms 15 are operable in a plurality of selectable working positions in the working state thereof for selectively setting the level above the ground at which a forward edge of attack 68 of the tedding rotors 23 engage the crop material lying on stubble on the ground, in order to accommodate different lengths of stubble. The forward edge of attack 68 of each tedding rotor 23 is defined by a forwardly facing portion of a locus defined by distal ends 69 of the crop engaging tines 29 as the tedding rotor 23 rotates.

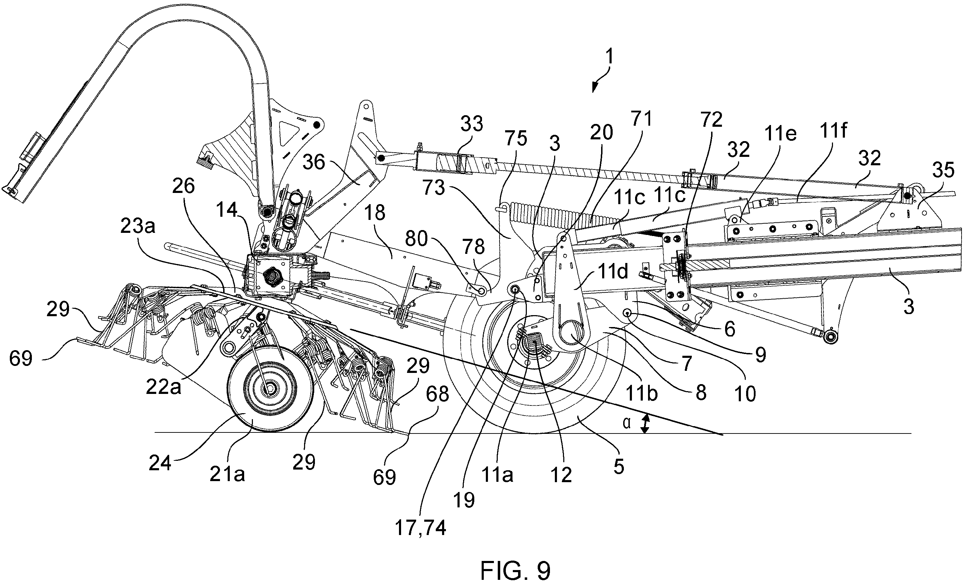

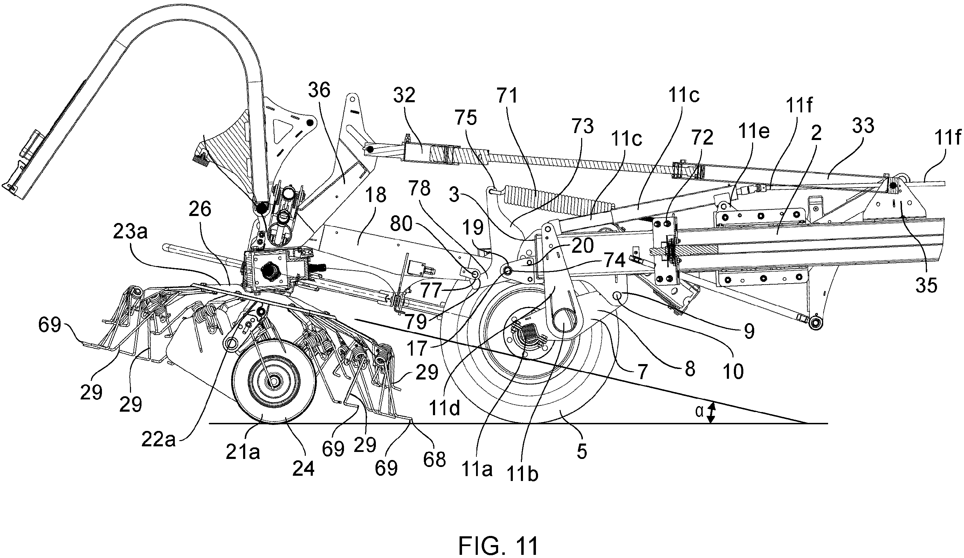

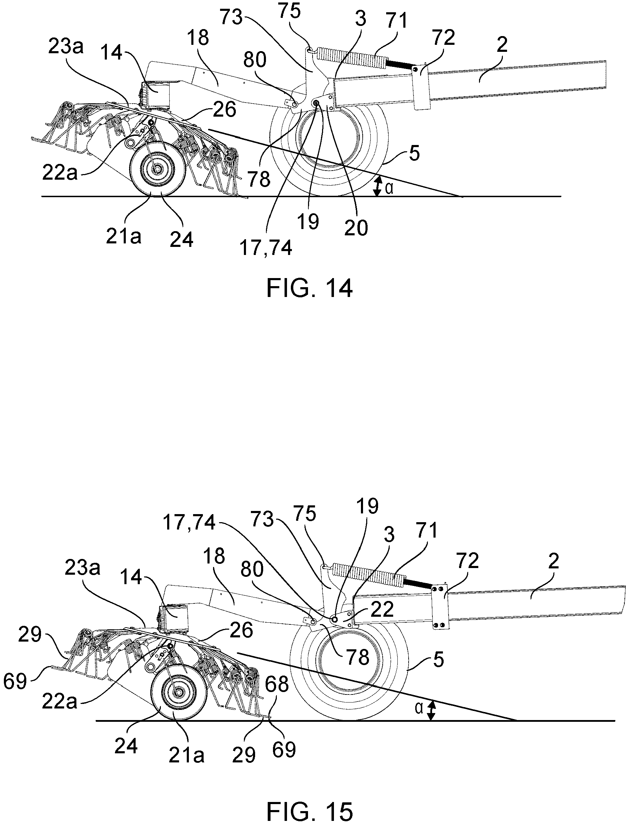

Referring in particular to Figs. 9 to 15, the selectable working positions of the rotor carrier 14 and the rotor carrying booms 15 are obtained by varying the level of the chassis 2, and in turn the main transverse pivot axis 17 above the level of the transverse rotational axis 12 of the main ground engaging wheels 6, and in turn above the ground. The level of the rotor carrier 14 above the ground is varied by pivoting the suspension system 7 about the transverse suspension pivot axis 10. By lowering the level of the chassis 2 above the ground, the rotor carrier 14 is pivoted upwardly about the main transverse pivot axis 17, which in turn increases the angle *α* which the tedding rotors 23 make with the ground. By increasing the angle *α* the level of the forward edge of attack 68 of each tedding rotor 23 above the ground is lowered. By reducing the angle *α* as the level of the chassis 2 above the ground is increased, the level of the forward edge of attack 68 of each tedding rotor 23 above the ground is increased. Accordingly, the desired working position of the rotor carrier 14 and the rotor carrying booms 15 is selected by pivoting the suspension system 7 about the transverse suspension pivot axis 10 by rotating the adjusting spindle (not shown) in the telescoping members 11c with the cranked handle 11g until the rotor carrier 14 and the rotor carrying booms 15 are in the desired working position. The adjusting spindle (not shown) is configured to retain the suspension system 7 in the selected position with the rotor carrier 14 and the rotor carrying booms 15 in the selected working position.

Such tedder apparatus as the tedder apparatus 1 described to here, will be well known to those skilled in the art, and further description of the general arrangement of the tedder apparatus 1 should not be required.

It has been found that in tedder apparatus known heretofore of the type similar to the tedder apparatus 1 described to here, when the rotor carrier 14 and the rotor carrying booms 15 are all in the working state with the secondary ground engaging wheels 21 of the rotor carrier 14 and the rotor carrying booms 15 engaging the ground, the weight of the rotor carrier 14 and the rotor carrying booms 15 bearing on the ground through the secondary ground engaging wheels 21 varies from one secondary ground engaging wheel 21 to the next. In general, the weight bearing on the ground through each of the two secondary ground engaging wheels 21 which are carried on the rotor carrier 14 is greater than the weight bearing on the ground through each of the secondary ground engaging wheels 21 carried on the rotor carrying booms 15.

Accordingly, in such known tedder apparatus of the type similar to the tedder apparatus 1, which comprise a rotor carrier similar to the rotor carrier 14 with two spaced apart secondary ground engaging wheels 21, and two rotor carrying booms 15, each carrying four secondary ground engaging wheels 21, during normal operation in the working state of the rotor carrier 14 and the rotor carrying booms 15, it has been found that the total weight of the rotor carrier 14 and the rotor carrying booms 15 bearing on the ground through the ten secondary ground engaging wheels 21 of such tedder apparatus known heretofore is approximately 2,030kg. The distribution of this weight is not evenly distributed over the ten secondary ground engaging wheels 21.

It has been found that the weight bearing on the ground through each one of the two secondary ground engaging wheels 21a of the rotor carrier 14 is approximately 340kg. The weight bearing on the ground through each one of the secondary ground engaging wheels 21b to 21e of each rotor carrying boom 15 ranges from 115kg to 230kg. The weight bearing on the ground through the outermost one of the secondary ground engaging wheels 21 of each rotor carrying boom 15, namely, the secondary ground engaging wheel 21e carried on the outer segment 43 of the corresponding rotor carrying boom 15 is approximately 115kg. The weight bearing on the ground through the outermost one of the secondary ground engaging wheels 21 of the inner segment 42 of each rotor carrying boom 15, namely, the secondary ground engaging wheel 21d is also approximately 115kg. The weight bearing on the ground through the secondary ground engaging wheel 21c of each rotor carrying boom 15 is approximately 230kg, while the weight bearing on the ground through the innermost one of the secondary ground engaging wheels 21 of each rotor carrying boom 15, namely, the secondary ground engaging wheel 21b is approximately 215kg.

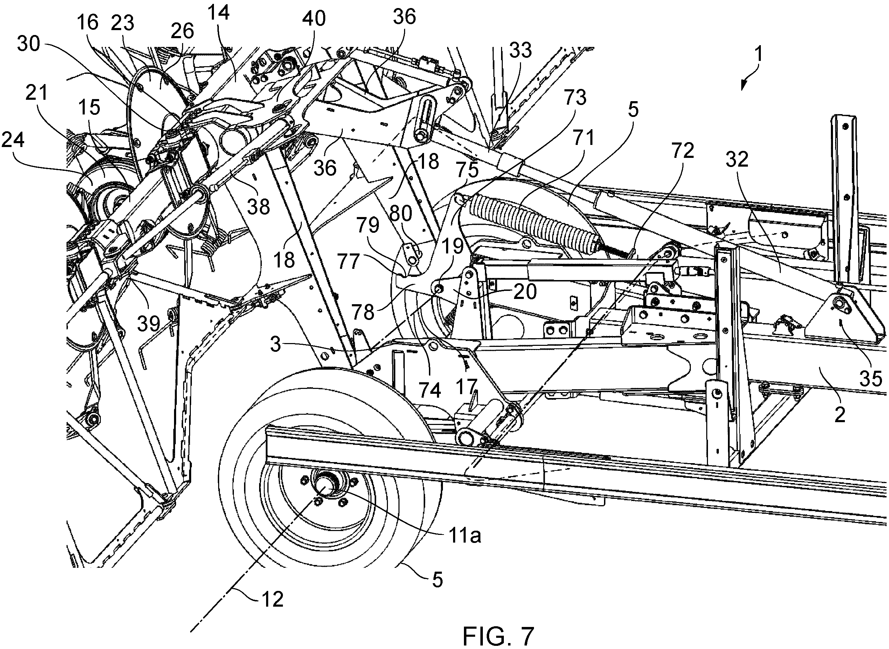

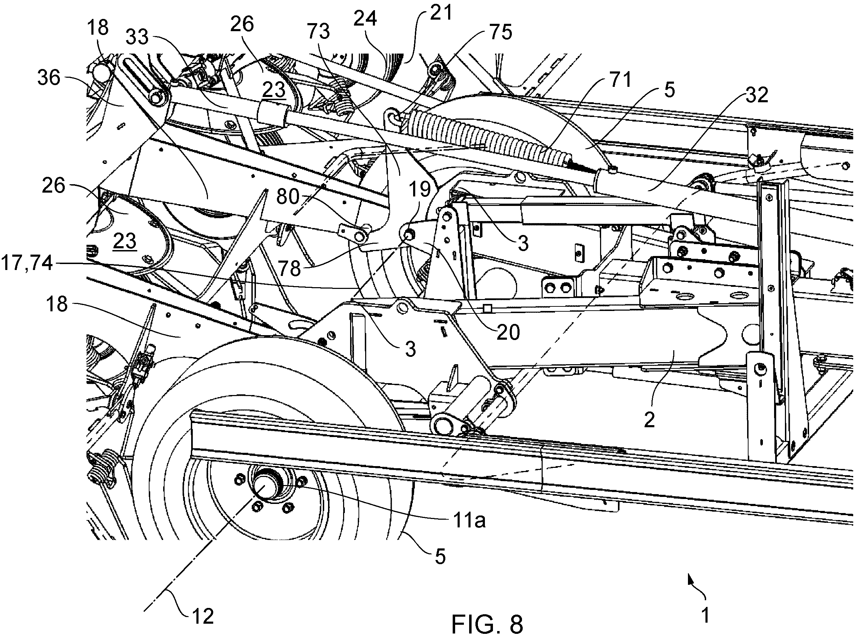

The tedder apparatus 1 according to the invention addresses this problem. The problem is addressed in the tedder apparatus 1 by the provision of a take-up means for taking up a portion of the weight of the rotor carrier 14 and the rotor carrying booms 15 which bears on the ground through the two secondary ground engaging wheels 21 of the rotor carrier 14, so that the weight of the rotor carrier 14 and the rotor carrying booms 15 bearing on the ground through the secondary ground engaging wheels 21 is more evenly distributed. In this embodiment of the invention the take-up means comprises a resilient take-up element, namely, a take-up tension spring 71 acting between the chassis 2 and the rotor carrier 14, see Figs. 7 to 15. The take-up spring 71 is coupled to the chassis 2 by an anchor bracket 72, and is operably coupled to the rotor carrier 14 through a pivotally mounted coupler 73. The coupler 73 is pivotally coupled to the chassis 2 about a transverse pivot axis 74, which in this case coincides with the main transverse pivot axis 17, and is configured to be operably engageable with the rotor carrier 14 when the rotor carrier 14 is in the working state in each and all of the selectable working positions of the rotor carrier 14. The coupler 73 is pivotally carried on one of the pivot shafts 19 which define the main transverse pivot axis 17, about which the rotor carrier 14 is pivotal through the working positions and between the working state and the transport state.

The take-up spring 71 is coupled to the coupler 73 at a connecting location 75 spaced apart from the main transverse pivot axis 17 as will be described in more detail below. An engagement recess 77 in a first engagement member 78 formed by the coupler 73 defines a contact point 79. A second engagement member, namely, an engagement pin 80 extends transversely from the corresponding carrier member 18 of the rotor carrier 14, which is pivotally carried on the pivot shaft 19 about which the coupler 73 is pivotal. The engagement pin 80 of the carrier member 18 is engageable with the contact point 79 defined by the engagement recess 77 in the first engagement member 78 when the rotor carrier 14 is in the working state for taking up a portion of the weight of the rotor carrier 14 and the rotor carrying booms 15 bearing on the ground through the two secondary ground engaging wheels 21 while the rotor carrier 14 is in the working state.

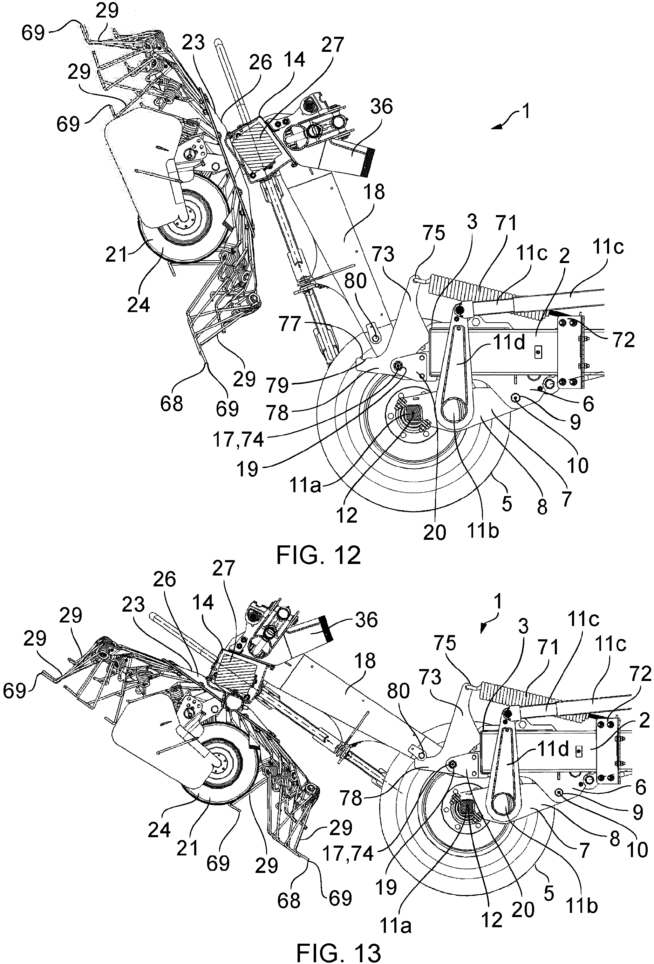

The coupler 73 and the engagement pin 80 on the corresponding carrier member 18 of the rotor carrier 14 are arranged relative to each other, so that the engagement pin 80 is disengageable from the engagement recess 77 of the first engagement member 78 as the rotor carrier 14 is being pivoted from the working state to the transport state, see Figs. 7 and 12, in order not to impede pivoting of the rotor carrier 14 from the working state to the transport state. The engagement pin 80 is engageable with the engagement recess 77 of the first engagement member 78 as the rotor carrier 14 is being pivoted from the transport state to the working state and is approaching the working state just prior to the rotor carrier 14 reaching the working state, see Fig. 13.

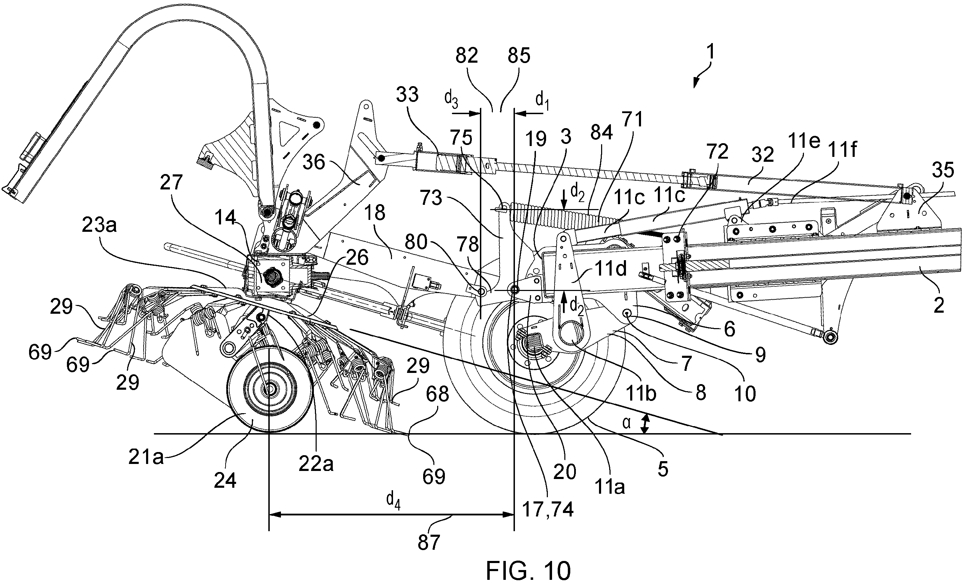

Referring now to Fig. 10, since the transverse pivot axis 74 about which the coupler 73 is pivotal coincides with the main transverse pivot axis 17, the contact point 79 defined by the engagement recess 77 in the first engagement member 78 is spaced apart a distance *d₁* from the main transverse pivot axis 17, and defines a first moment arm 82 about the main transverse pivot axis 17, about which the portion of the weight of the rotor carrier 14 and the rotor carrying booms 15 taken up by the take-up spring 71 acts. The connecting location 75 at which the take-up spring 71 is connected to the coupler 73 is spaced apart from the main transverse pivot axis 17 a distance *d₂*, and defines a second moment arm 84 about which the take-up spring 71 acts on the coupler 73 about the main transverse pivot axis 17. In this embodiment of the invention the length *d₁* of the first moment arm 82 is approximately 156mm, and the length *d₂* of the second moment arm 84 is approximately 382mm. Accordingly, the length *d₂* of the second moment arm 84 is greater than the length *d₁* of the first moment arm 82, and in this embodiment of the invention the length *d₂* of the second moment arm 84 is approximately equal to two and a half times the length of the first moment arm 82, so that *d₂* = 2.5.*d₁*.

The engagement pin 80 is spaced apart from the main transverse pivot axis 17 a distance d₃, which is equal to the distance *d₁* by which the contact point 79 defined by the engagement recess 77 in the first engagement member 78 is spaced apart from the main transverse pivot axis 17, and accordingly, the engagement pin 80 defines a third moment arm 85 about which the weight of the rotor carrier 14 and the rotor carrying booms 15 acts about the main transverse pivot axis 17 on the coupler 73, the length of the third moment arm 85 being equal to the length of the first moment arm 82. The distance between the main transverse pivot axis 17 and the point of contact of the two secondary ground engaging wheels 21 of the rotor carrier 14 with the ground, through which the weight of the rotor carrier 14 and the rotor carrying booms 15 acts is a distance *d₄*, which defines a fourth moment arm 87, through which the weight of the rotor carrier 14 and the rotor carrying booms 15 acts about the main transverse pivot axis 17. The length *d₄* of the fourth moment arm 87 in this embodiment of the invention is approximately 1,181mm, and is greater than the length *d₃* of the third moment arm 85, and in this embodiment of the invention the length *d₄* of the fourth moment arm 87 is equal to approximately seven and a half times the length *d₃* of the third moment arm 85, so that *d₄* = 7.5.*d₃*.

It has been found that by setting the take-up spring 71 to take up 380kg in total of the weight bearing on the ground through the two secondary ground engaging wheels 21a of the rotor carrier 14, when the rotor carrier 14 and the rotor carrying booms 15 are in the working state, in general, the weight bearing on the ground through each of the two secondary ground engaging wheels 21a of the rotor carrier 14 is approximately 150kg, with the weight bearing on the ground through each of the secondary ground engaging wheels 21b to 21e of the rotor carrying booms 15 remaining unchanged as discussed above at 215kg, 230kg, 115kg and 115kg from the innermost secondary ground engaging wheel 21bto the outermost secondary ground engaging wheel 21e of each one of the rotor carrying booms 15. Therefore, the total weight of the rotor carrier 14 and the rotor carrying booms 15 bearing on the ground through the ten secondary ground engaging wheels 21 of the tedder apparatus 1 according to the invention when the rotor carrier 14 and the rotor carrying booms 15 are in the working state is approximately 1,650kg. Accordingly, the average weight carried by each of the ten secondary ground engaging wheels 21 is approximately 165kg, with the maximum positive deviation from the average being 65kg or 40% of the average, as opposed to the maximum positive deviation of 137kg from the average or 67.5% in the case of the ten tedding rotor prior art tedding apparatus without the take-up means.

Accordingly, since the maximum positive deviation of the load carried by any of the secondary ground engaging wheels 21 of the rotor carrier 14 and the rotor carrying booms 15 from the average weight carried by each of the secondary ground engaging wheels 21 of the tedder apparatus 1 according to the invention does not exceed 65kg, and since the weight carried by each of the two secondary ground engaging wheels 21 of the rotor carrier 14 is less than the average weight of 165kg carried by each of the secondary ground engaging wheels 21, and furthermore, is less than the weight carried by two of the secondary ground engaging wheels 21 of each of the rotor carrying booms 15, namely, the secondary ground engaging wheels 21c, the two secondary ground engaging wheels 21 of the rotor carrier 14, their pneumatic tyres 24, as well as their associated wheel carriers 22 thereof may be provided to be of similar load bearing capacity to that of the secondary ground engaging wheels 21 of the two rotor carrying booms 15. Thereby, the secondary ground engaging wheels 21 and the pneumatic tyres 24 thereof as well as the associated wheel carriers 22 of both the rotor carrier 14 and the rotor carrying booms 15 may be standardised and of similar load carrying capacities suitable for bearing the maximum load of 230kg, which is borne by the secondary ground engaging wheel 21c of each of the rotor carrying booms 15.

Returning now to the coupler 73, as discussed above the engagement pin 80 of the corresponding carrier member 18 of the rotor carrier 14 is disengageable from the contact point 79 defined by the engagement recess 77 in the first engagement member 78 of the coupler 73 as the rotor carrier 14 is being pivoted from the working state to the transport state, see Figs. 7 and 12. Additionally, as discussed above, the first engagement member 78 of the coupler 73 is arranged relative to the engagement pin 80, so that as the rotor carrier 14 is being pivoted from the transport state and is approaching the working state, the engagement pin 80 engages the contact point 79 of the first engagement member 78 of the coupler 73 just prior to the rotor carrier 14 reaching the working state, see Fig. 13. Therefore, neither the take-up spring 71 nor the coupler 73 impede pivoting of the rotor carrier 14 between the working state and the transport state. Additionally, the engagement pin 80 is engaged by the contact point 79 defined by the engagement recess 77 in the first engagement member 78 of the coupler 73 for all selectable working positions of the rotor carrier 14 in the working state thereof, and in turn for all levels of the tedding rotors 23 above the ground in the working state of the rotor carrier 14 and the rotor carrying booms 15. Furthermore, the contact point 79 of the first engagement member 78 follows the engagement pin 80 under the action of the take-up tension spring 71, as the rotor carrier 14 pivots about the main transverse pivot axis 17 as the two secondary ground engaging wheels 21a of the rotor carrier 14 follow the contour of the ground. Thereby, the portion of the weight bearing on the ground through each one of the secondary ground engaging wheels 21a of the rotor carrier 14 remains substantially constant during normal crop tedding by the tedder apparatus 1.

Additionally, by virtue of the fact that the first engagement member 78 of the coupler 73 is arranged relative to the engagement pin 80 of the corresponding carrier member 18 of the rotor carrier 14, so that the engagement pin 80 engages the contact point 79 of the first engagement member 78 prior to the rotor carrier 14 reaching the working state, the take-up spring 71 takes up a portion of the impact load acting through the two secondary ground engaging wheels 21 of the rotor carrier 14 on the ground, as the rotor carrier 14 is being pivoted about the main transverse pivot axis 17 from the transport state into the working state.

In use, when the tedding apparatus 1 has been towed to the field in which the crop material is to be tedded, and the tedder apparatus 1 is in the transport state, to operate the rotor carrier 14 and the rotor carrying booms 15 from the transport state to the working state, initially, the second main hydraulic ram 33 is fully extended for urging the rotor carrier 14 from the transport state through an angle of approximately 15° to an intermediate state (not shown) between the transport state and the working state with the inner segments 42 of the rotor carrying booms 15 retained at 90° to the rotor carrier 14 by the secondary hydraulic rams 38, and with the outer segments 43 of the rotor carrying booms 15 lying parallel and adjacent to the inner segments 42 thereof. With the rotor carrier 14 in the intermediate state, the secondary hydraulic rams 38 are operated for urging the inner segments 42 of the rotor carrying booms 15 from the orientation extending at 90° to the rotor carrier 14 to the working state thereof relative to the rotor carrier 14 with the inner segments 42 of the rotor carrying booms 15 extending outwardly from the rotor carrier 14. Simultaneously, as the secondary hydraulic rams 38 are urging the inner segments 42 of the rotor carrying booms 15 into the working state, the first and second hydraulic rams 55 and 59 operate the outer segments 43 of the rotor carrying booms 15 from the state parallel and adjacent to the inner segments 42 to the working state with the outer segments 43 extending outwardly from the inner segments 42. With the inner segments 42 and the outer segments 43 of the rotor carrying booms 15 in the working state relative to the rotor carrier 14, the first main hydraulic ram 32 is operated for urging the rotor carrier 14 from the intermediate state to the working state.

As the rotor carrier 14 is being pivoted from the intermediate state to the working state, prior to the rotor carrier 14 reaching the working state, the engagement pin 80 of the corresponding carrier member 18 of the rotor carrier 14 engages the contact point 79 defined by the engagement recess 77 of the first engagement member 78. Thus, as the rotor carrier 14 is approaching the working state, the take-up spring 80 takes up some of the impact load acting on the ground through the secondary ground engaging wheels 21a of the rotor carrier 14.

The first and second main hydraulic rams 32 and 33 and the secondary hydraulic rams 38 are operated into the floating state, so that as the tedder apparatus 1 is towed by the towing vehicle in the direction of the arrow A for tedding the crop material, and the secondary ground engaging wheels 21 follow the contour of the ground, the rotor carrier 14 and the inner and outer segments 42 and 43 of the rotor carrying booms 15 likewise are free to follow the contour of the ground, thereby maintaining the forward edge of attack 68 of the tedding rotors 23 at a substantially constant level above the ground.

Prior to commencing tedding of the crop material, the rotor carrier 14 is set in the desired one of the working positions with the level of the forward edge of attack 68 of the tedding rotors 23 above the ground set at the desired level. This is carried out by pivoting the suspension system 7 about the transverse suspension pivot axis 10 in the appropriate direction, for either raising or lowering the level of the chassis 2, and in turn the main transverse pivot axis 17 above the ground. By lowering the level of the chassis 2 and in turn the main transverse pivot axis 17 above the ground, the rotor carrier 14 pivots upwardly about the main transverse pivot axis 17, thus increasing the angle *α* of the tedding rotors 23 relative to the ground, which in turn lowers the level of the forward edge of attack 68 of the tedding rotors 23 above the ground. To raise the level of the forward edge of attack 68 of the tedding rotors 23 above the ground, the level of the chassis 2, and in turn the main transverse pivot axis 17 above the ground is raised. This in turn results in the rotor carrier 14 being pivoted downwardly about the main transverse pivot axis 17, which in turn reduces the angle *α* the tedding rotors 23 relative to the ground, thereby raising the level of the forward edge of attack 68 of the tedding rotors 23 above the ground. Once the rotor carrier 14 is in the desired working position with the level of the forward edge of attack 68 of the tedding rotors 23 at the desired level above the ground, the tedder apparatus 1 is ready for towing to ted the crop material lying on the ground.

As the tedder apparatus 1 is being towed over the ground for tedding the crop material lying on the ground, the secondary ground engaging wheels 21 follow the contour of the ground thereby pivoting the rotor carrier 14 relative to the chassis 2 about the main transverse pivot axis 17, and as the rotor carrier 14 pivots relative to the chassis 2, the contact point 79 of the first engagement member 78 of the coupler 73 follows the engagement pin 80 of the rotor carrier 14 under the action of the take-up spring 71, so that the portion of the weight of the rotor carrier 14 and the rotor carrying booms 15 bearing on the ground through each of the two secondary ground engaging wheels 21a of the rotor carrier 14 taken up by the take-up spring 71 remains substantially constant, and the weight bearing on the ground through each one of the two secondary ground engaging wheels 21a of the rotor carrier 14 remains substantially constant at approximately 150kg.

Accordingly, as the tedder apparatus 1 is towed to ted crop material lying on the ground, the weight bearing on the ground through each one of the two secondary ground engaging wheels 21a of the rotor carrier 14 is significantly reduced, and in this embodiment of the invention is approximately equal to 150kg, which is below the average value of the weight bearing on the ground through each one of the secondary ground engaging wheels 21 of approximately 165kg, and remain substantially constant as the rotor carrier 14 pivots about the main transverse pivot axis 17 relative to the chassis 2 as the secondary ground engaging wheels 20 follow the contour of the ground.

While the take-up means has been described as comprising a specific type of resilient take-up element, in this case a tension spring, any other suitable take-up means may be provided, for example, a hydraulic spring or a pneumatic spring. Furthermore, it will be appreciated that instead of the take-up means comprising a tension spring, in some embodiments of the invention it is envisaged that the take-up means may be provided by a compression spring, which would be appropriately coupled between the chassis and the rotor carrier. It is also envisaged that a take-up means other than a resilient take-up element may be provided. It will also of course be appreciated that the take-up means may be coupled to the rotor carrier by any suitable means, and in some embodiments of the invention it is envisaged that the take-up means may be coupled directly to the rotor carrier or to one or both the carrier members of the rotor carrier. It will also of course be appreciated that any other suitable coupling means for coupling the take-up means to the rotor carrier besides the coupler may be provided. It will also be appreciated that the take-up means instead of being releasably coupled to the rotor carrier may be releasably coupled to the chassis, and in some embodiments of the invention it is envisaged that the take-up means may be non-releasably coupled to both the rotor carrier or any part thereof and to the chassis or any part thereof.

While the take-up means has been described as taking up specific values of weight of the rotor carrier and the rotor carrying booms bearing on the ground through the two secondary ground engaging wheels of the rotor carrier, it will be readily apparent to those skilled in the art that the take-up means may be configured to take up any suitable proportion of the weight of the rotor carrier and the rotor carrying booms bearing on the ground through the two secondary ground engaging wheels of the rotor carrier.

It is also envisaged that in some embodiments of the invention the take-up means may be coupled releasably or otherwise to the two carrier members of the rotor carrier. It is also envisaged that the take-up means may be coupled directly onto the rotor carrier, either through the coupler, or directly without the coupler.

Additionally, it is envisaged that while the first, second, third and fourth moment arms have been described as being of specific lengths, the moment arms may be of any other suitable lengths. Indeed, it is envisaged that the length of the first moment arm may range from 106mm to 206mm, while the length of the second moment arm may range from 332mm to 432mm, and the fourth moment arm may range in length from 981mm to 1,381mm. Needless to say the lengths of the moment arms may be longer or shorter than the above ranges of lengths thereof. Additionally, it will be appreciated that while in the embodiment of the invention described the first and third moment arms have been described as being of the same length, in some embodiments of the invention the third moment arm may be of a different length to that of the first moment arm, and that would occur, in cases where the coupler is pivotally coupled to the chassis about a coupler pivot axis which also extends transversely of the normal forward direction of travel of the tedder apparatus, but is spaced apart longitudinally along the chassis from the main transverse pivot axis.

It will also be appreciated that the coupler 73 may be pivotally coupled to the chassis about a pivot axis other than the main transverse pivot axis.

While the tedder apparatus according to the invention has been described as being of a specific construction, the tedder apparatus may be of any other suitable construction.

It will also of course be appreciated that while the rotor carrying booms have been described as each carrying four tedding rotors and four secondary ground engaging wheels, any suitable number of tedding rotors and ground engaging wheels may be provided on the respective rotor carrying booms, and the number of tedding rotors on each rotor carrying boom will be determined by the length of the rotor carrying boom. It will also of course be appreciated that the secondary ground engaging wheels may be provided spaced apart from the tedding rotors. While it is desirable, it is not essential that the secondary ground engaging wheels extend from the tedding rotors, and the number of secondary ground engaging wheels may be different to the number of tedding rotors.

It will also of course be appreciated that while the rotor carrier has been described as carrying two secondary ground engaging wheels, any number of secondary ground engaging wheels may be carried on the rotor carrier. Indeed, it is envisaged that in some embodiments of the invention the rotor carrier may be provided with only one single secondary ground engaging wheel. Additionally, it is envisaged that any number of tedding rotors may be provided on the rotor carrier, and in some embodiments of the invention that a single tedding rotor may be provided on the rotor carrier.

While the rotor carrying booms have been described as comprising two segments, namely, an inner segment and an outer segment, it is envisaged that each rotor carrying boom may be provided as a single segment rotor carrying boom. For example, in general, it is envisaged that in the case of tedder apparatus comprising rotor carrying booms carrying three tedding rotors or less, each rotor carrying boom would be provided as a single segment boom. It will also of course be appreciated that the outer segment of each rotor carrying boom may be configured to carry more than one tedding rotor, for example, in tedder apparatus where each rotor carrying boom is configured to carry more than four tedding rotors, the outer segment may be configured to carry more than a single tedding rotor.

Needless to say, the tedder apparatus according to the invention may include rotor carrying booms of any desirable length, carrying any desirable number of tedding rotors, and each rotor carrying boom may be provided as comprising a single segment, two segments, and indeed, in some embodiments of the invention three and more segments, where each segment would carry one or more tedding rotors.

## Claims

1. A tedder apparatus comprising a chassis (2) extending between a forward end (4) and a rearward end (3), and supported on a pair of transversely spaced apart rotatably mounted main ground engaging wheels (5), a rotor carrier (14) pivotally coupled to the chassis (2) adjacent the rearward end (3) thereof about a main transverse pivot axis (17) extending transversely of the normal forward direction of travel of the tedder apparatus, the rotor carrier (14) being pivotal about the main transverse pivot axis (17) between a working state and a transport state, at least one tedding rotor (23) carried on the rotor carrier (14), and at least one rotatably mounted secondary ground engaging wheel (21) carried on the rotor carrier (14) for maintaining the level of the tedding rotor (23) above the ground substantially constant in the working state of the rotor carrier (14), **characterised in that** a take-up means (71) is adapted to act between the chassis (2) and the rotor carrier (14) to take up a portion of the weight of the rotor carrier (14) bearing on the ground through the at least one secondary ground engaging wheel (21) when the rotor carrier (14) is in the working state.

2. A tedder apparatus as claimed in Claim 1 **characterised in that** the take-up means (71) is releasably engageable with the rotor carrier (14), and is adapted to operably engage the rotor carrier (14) in the working state thereof.

3. A tedder apparatus as claimed in Claim 1 or 2 **characterised in that** the take-up means (71) is adapted to operably engage the rotor carrier (14) as the rotor carrier (14) is being pivoted into the working state from the transport state, and preferably, the take-up means (71) is adapted to disengage the rotor carrier (14) as the rotor carrier is being pivoted out of the working state to the transport state.

4. A tedder apparatus as claimed in any preceding claim **characterised in that** the take-up means (71) is operably coupled to the rotor carrier (14) through a pivotally mounted coupler (73).

5. A tedder apparatus as claimed in Claim 4 **characterised in that** the coupler (73) is pivotally coupled about a coupler pivot axis (74) extending parallel to the main transverse pivot axis (17), and preferably, the coupler (73) is pivotally coupled to the chassis (2).

6. A tedder apparatus as claimed in Claim 4 or 5 **characterised in that** the coupler (73) comprises a first engagement member (77, 78, 79) engageable with a second engagement member (80) of the rotor carrier (14) in the working state of the rotor carrier (14).

7. A tedder apparatus as claimed in Claim 6 **characterised in that** the first engagement member (78) defines a contact point (79) engageable with the second engagement member (80), the contact point (79) being spaced apart from the coupler pivot axis (74) to define a first moment arm (82) about which the weight of the rotor carrier (14) taken up by the take-up means (71) acts about the coupler pivot axis (74).

8. A tedder apparatus as claimed in Claim 7 **characterised in that** the take-up means (71) is coupled to the coupler (73), and preferably, the take-up means (71) is coupled to the coupler (73) at a location (75) spaced apart from the coupler pivot axis (74) to define a second moment arm (84) about which the take-up means (71) acts about the coupler pivot axis (74), and preferably, the length of the second moment arm (84) is greater than the length of the first moment arm (82).

9. A tedder apparatus as claimed in Claim 7 or 8 **characterised in that** the contact point (79) of the first engagement member (78) with the second engagement member (80) is spaced apart from the main transverse pivot axis (17) to define a third moment arm (85) through which the weight of the rotor carrier (14) to be taken up by the take-up means (71) acts about the main transverse pivot axis (17).

10. A tedder apparatus as claimed in Claim 9 **characterised in that** the point at which the at least one secondary ground engaging wheel (21) engages the ground and through which the weight of the rotor carrier (14) acts is spaced apart from the main transverse pivot axis (17) and defines a fourth moment arm (87) through which the weight of the rotor carrier (14) acts about the main transverse pivot axis (17), and the length of the fourth moment arm (87) is greater than the length of the third moment arm (85).

11. A tedder apparatus as claimed in any of Claims 5 to 10 **characterised in that** the coupler pivot axis (74) coincides with the main transverse pivot axis (17).

12. A tedder apparatus as claimed in any preceding claim **characterised in that** the rotor carrier (14) is operable in a plurality of selectable working positions in the working state thereof with the at least one tedding rotor (23) at respective selectable levels above the ground, and the take-up means (71) is adapted to take up the portion of the weight of the rotor carrier (14) during operation of the rotor carrier (14) in each of the selectable working positions of the rotor carrier (14) in the working state thereof.

13. A tedder apparatus as claimed in any preceding claim **characterised in that** the take-up means (71) comprises a resilient take-up element (71), and preferably, the take-up means (71) comprises one of a mechanical spring, a pneumatic spring and a hydraulic spring.

14. A method for taking up at least a portion of the weight of a rotor carrier (14) carrying at least one tedding rotor (23) and at least one rotatably mounted secondary ground engaging wheel (21) through which the weight of the rotor carrier (14) bears on the ground, wherein the rotor carrier (14) is pivotally coupled to a chassis (2) of a tedder apparatus (1) about a main transverse pivot axis (17) between a working state and a transport state, the main transverse pivot axis (17) extending transversely of the normal forward direction of travel of the tedder apparatus (1), and the chassis (2) is supported on a pair of transversely spaced apart main ground engaging wheels (5), the method comprising providing a take-up means (71) acting between the chassis (2) and the rotor carrier (14) to take up the portion of the weight of the rotor carrier (14) bearing on the ground through the at least one secondary ground engaging wheel (21) in the working state of the rotor carrier (14).

15. A method as claimed in Claim 14 **characterised in that** the take-up means (71) is releasably engageable with the rotor carrier (14), and operably engages the rotor carrier (14) in the working state thereof, and preferably, the take-up means (71) takes up the portion of the weight of the rotor carrier (14) as the rotor carrier (14) is pivoting into the working state from the transport state, and advantageously, the take-up means (71) disengages the rotor carrier (14) as the rotor carrier (14) is pivoting out of the working state to the transport state.
